Europäisches Patentamt

European Patent Office

Office européen des brevets

(11) Veröffentlichungsnummer: **0 290 993 B1**

# EUROPÄISCHE PATENTSCHRIFT

(45) Veröffentlichungstag der Patentschrift: **02.12.92**

(51) Int. Cl.⁵: **F23J 13/04**

(21) Anmeldenummer: **88107425.6**

(22) Anmeldetag: **09.05.88**

(54) **Rohrsystem zur Verwendung als Schornstein, Schornsteineinsatz oder dgl.**

(30) Priorität: **12.05.87 DE 3715727**

(43) Veröffentlichungstag der Anmeldung:
**17.11.88 Patentblatt 88/46**

(45) Bekanntmachung des Hinweises auf die
Patenterteilung:
**02.12.92 Patentblatt 92/49**

(84) Benannte Vertragsstaaten:
**AT BE CH GB LI LU NL**

(56) Entgegenhaltungen:
**EP-A- 0 100 580        CH-A- 175 279
CH-A- 363 455        DE-A- 3 445 319
DE-C- 839 694        FR-A- 2 588 357**

(73) Patentinhaber: **Münzner, Claus
Sudetenstrasse 2
W-8741 Salz(DE)**

Patentinhaber: **Münzner, Thomas
Birkenweg 9
W-8741 Rödelmaier(DE)**

(72) Erfinder: **Münzner, Claus
Sudetenstrasse 2
W-8741 Salz(DE)**
Erfinder: **Münzner, Thomas
Birkenweg 9
W-8741 Rödelmaier(DE)**

(74) Vertreter: **Fuchs, Richard
Kantstrasse 18
W-8700 Würzburg(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Rohrsystem zur Verwendung als Schornstein, Schornsteineinsatz oder dergleichen, bestehend aus emaillierten Rohrteilen mit Schnittkanten an den Rohrenden, wobei die emaillierten Rohrteile Flansche aufweisen, an denen sie mittels Spannringe miteinander verbunden sind, welche eine Dichtungsmasse oder Profildichtung enthalten, und wobei ferner die Flansche mindestens in den zylindrischen Körper der Rohrteile abgerundet übergehen und der Radius dieser abgerundeten Abschnitte mindestens etwa 2,5 mm beträgt.

Es ist bekannt, zur Vermeidung der sog. Versottung gemauerter Schornsteine diese mit Schamotterohren oder ineinandergesteckten Rohren aus Edelstahl auszukleiden. Schamotterohre sind jedoch für einen nachträglichen Einbau wenig geeignet und bei Edelstahlrohren besteht die Gefahr, daß sie vorzeitig korrodieren, insbesondere wenn schwefelhaltige Brennstoff verwendet werden. Außerdem erfordern Rohrsysteme aus Edelstahl bei ihrem nachträglichen Einbau im Bereich ihrer seitlichen Abzweigungen mit den Revisionsöffnungen bzw. der Anschlußöffnung für eine Abgasleitung ein weiträumiges Aufbrechen des gemauerten Schornsteins mit anschließender Einmauerung.

Durch die DE-OS 34 45 319 ist es ferner bekannt, als Schornstein, insbesondere als Schornsteineinsatz oder Auskleidung ein System aus emaillierten metallischen Rohrteilen vorzusehen. Grundsätzlich wären solche emaillierten Rohre bei entsprechender Auswahl und Ausbildung der Emailbeschichtung gegenüber den aggresiven Bestandteilen der Abgase sowie auch gegenüber mechanischen Einwirkungen bei der Schornsteinreinigung unempfindlich. Aus der DE-OS 34 45 319 geht jedoch nicht hervor, daß die praktisch emailfreien Schnittkanten an den Rohrenden und an den verschiedenen seitlichen Öffnungen der Rohrteile gegen diese aggressiven Bestandteile der Abgase bzw. des Kondensats geschützt werden. In der Emailtechnik ist es bekannt, daß an solchen in der Regel scharfkantigen Schnittkanten die Emaillierung während des Einbrennvorganges verbrennt bzw. "abzehrt". Man spricht in diesem Zusammenhang auch davon, daß Email prinzipiell "kantenflüchtig" ist. Die oben erwähnten Schnittkanten bilden demzufolge bei den bekannten emaillierten Rohrsystemen für die eingangs erläuterten Zwecke korrosionsgefährdete Stellen, die an sich gegen die Praxistauglichkeit solcher Systeme sprechen. Bei den hier infrage kommenden Anwendungsfällen erwartet man nämlich eine relativ lange Lebensdauer der Rohrsysteme.

Durch die CH-A-363 455 ist ein Schornstein aus emmaillierten metallischen Rohrteilen bekannt, bei dem jedoch die Flansche an den Enden der einzelnen Rohrteile nur ungenügend aus dem abgasführenden lichten Querschnitt der Rohrteile herausgezogen sind, so daß herablaufendes aggressives Kondensat die Schnittkanten an den Flanschen erreichen kann. Da die beim Gegenstand dieser Vorveröffentlichung verwendeten Dichtungen in den Spannringen aus Asbest bestehen, saugen diese Dichtungen herablaufendes Kondensat geradezu an und führen es an die Schnittkanten an den Flanschen heran, so daß diese der Korrosion ausgesetzt sind. Schließlich werden bei dieser bekannten Konstruktion die Dichtungen bei der Kontraktion der Spannringe nicht zwischen den Flanschen radial nach innen gedrückt.

Der Erfindung liegt die Aufgabe zugrunde, emaillierte Rohrsysteme für die Verwendung als Schornstein, Schornsteineinsatz bzw.-auskleidung usw. korrosionsfest und damit praxistauglich zu machen, insbesondere auch ihren nachträglichen Einbau in gemauerte Schornsteine zu vereinfachen.

Gemäß der Erfindung wird obige Aufgabe dadurch gelöst, daß die Schnittkanten an den Flanschen an den Rohrenden so weit aus dem abgasführenden lichten Querschnitt der Rohrteile heraus nach außen geführt und derart in den Spannringen angeordnet sind, daß bei der Kontraktion der Spannringe die Dichtungsmasse oder Profildichtung einerseits zuischen den Flanschen und andererseits zwischen den Flanschen und den Seitenwänden der Spannringe radial nach innen gedrückt wird, um die Schnittkanten in der Dichtungsmasse oder Profildichtung hermetisch einzuschließen.

Die in der Dichtungsmasse bzw. Profildichtung abgedichtet eingebetteten praktisch emailfreien Schnittkanten an den Rohrteilen sind auf diese Weise gegenüber den aggressiven Bestandteilen der Abgase und des Kondensats sicher geschützt, wodurch die Haltbarkeit von emaillierten Rohrsystemen als Schornstein oder Schornsteineinsatz im Vergleich zum Stand der Technik wesentlich erhöht wird. Mittels der Verbindungs- und Spannringe und der in ihren Hohlraum einzubringenden Dichtungsmasse bzw. Profildichtung können die einzelnen Rohrteile nacheinander einfach und schnell montiert werden. Die Verbindungs- und Spannringe können dabei zur erforderlichen Kontraktion mit üblichen, einfach umlegbaren Schnellverschlüssen (Hebelschnellverschlüsse) versehen sein. Die Verbindungen zwischen den einzelnen Rohrteilen weisen eine hohe Gasdichtheit auf, so daß in erwünschter Weise Druckverluste minimiert werden. Wenn die Rohraushalsungen im Bereich der seitlichen Revisions- und Anschlußöffnungen relativ kurz sind (ca. 10 - 20 mm), eignet sich das erfindungsgemäße Rohrsystem auch vorzüglich für einen nachträglichen Einbau in gemauerte Schornsteine, denn man kann sämtliche Rohrteile ohne weiteres von oben in den zu sanierenden Schornstein einführen.

Wenngleich das erfindungsgemäße Rohrsystem besonders für den nachträglichen Einbau in versottungsgefährdete gemauerte Schornsteine konzipiert ist, kann es jedoch ebenso vorteilhaft als freistehender Schornstein oder als beliebige andere Rauchgasleitung eingesetzt werden.

Ausgestaltungen der Erfindung gehen aus den Unteransprüchen hervor. So ist es zweckmäßig, wenn die Flansche an jedem Rohrteil so abgerundet und ausgebildet sind, daß die Flansche benachbarter Rohrteile ineinandergreifen, und daß ein Verbindungs- und Spannring mit im wesentlichen V- oder U-förmigem Querschnitt die Flansche benachbarter Rohrteile umfaßt, axial gegeneinander drückt und dabei die Rohrteile zentriert. Dadurch wird z.B. während des Einbaus der emaillierten Rohrteile in einen Schornstein deren erforderliche axiale Ausfluchtung auf einfache Weise erreicht. Der hohle Querschnitt des Verbindungs- und Spannrings nimmt die Dichtungsmasse oder Profildichtung auf.

Wenn nach Anspruch 3 die Flansche an jedem Rohrteil aus je einem Tellerflansch und Bördelflansch mit nach oben gerichteten Schnittkanten bestehen, und der Bördelflansch an einem Rohrteil überstehend im Tellerflansch eines benachbarten Rohrteils sitzt, und jeder Bördelflansch und Tellerflansch in Berührung mit den gegenüberliegenden schrägen Seitenwänden eines Verbindungs- und Spannringes steht, wird die axiale Verspannung der einzelnen Rohrteile und deren Zentrierung bzw. axiale Ausfluchtung weiter begünstigt. Selbst wenn nach langer Einsatzdauer des Rohrsystems oder durch unsachgemäße bzw. ungenügende Einbringung von Dichtungsmasse in den Hohlraum des Verbindungs- und Spannringes an einer Verbindungsstelle eine Undichtigkeit auftreten sollte, wird an den Innenwandungen der Rohrteile evtl. abfließendes und aggresive Bestandteile enthaltendes Kondensat durch den Tellerflansch aufgefangen und nach unten abgeführt, so daß es nicht die nach oben gerichteten, praktisch emailfreien und dadurch korrosionsgefährdeten Schnittkanten erreichen kann.

Eine weitere einfache und eine Emailabzehrung vermeidende Formgebung der Flansche an jedem Rohrteil geht aus Anspruch 4 hervor.

Nach noch einer weiteren Ausgestaltung der Erfindung ist der Verbindungs- und Spannring zweckmäßig an beiden Seiten mit geringfügig angestellten Auflageflanschen versehen, die im kontraktierten Zustand des Verbindungs- und Spannrings vollflächig am Außenumfang benachbarter Rohrteile anliegen und somit der Verbindungsstelle zusätzliche Knickfestigkeit vermitteln.

Die Erfindung wird anschließend anhand der Zeichnungen von Ausführungsbeispielen erläutert. Es zeigen:

Figur 1 einen Längsschnitt durch einen gemauerten Schornstein z.B. eines Wohnhauses, in den das emaillierte Rohrsystem gemäß der Erfindung eingebaut ist;

Figur 2 einen Teil-Längsschnitt in stark vergrößertem Maßstab im Bereich einer Verbindungsstelle zweier Rohrteile des Rohrsystems nach Fig. 1;

Figuren 3 - 6 mehrere Teil-Längsschnitte ähnlich der Fig. 2, jedoch mit unterschiedlichen Flanschformen und Verbindungs- und Spannringen.

Zur Erläuterung der Erfindung ist als Ausführungsbeispiel ein in einen gegen Versottung zu schützenden gemauerten Schornstein 10 nachträglich eingebautes Rohrsystem 11 gewählt. Bei dem gemauerten Schornstein 10 kann es sich beispielsweise um einen solchen eines Wohnhauses handeln, welcher oben und unten mit je einer Revisionsöffnung 12 versehen ist, die nach außen durch übliche Kamintürchen 13 verschließbar sind. Mit 14 ist eine weitere Öffnung im Schornstein 10 für die Einführung einer nicht gezeigten Abgasleitung einer Feuerungseinrichtung der Heizungsanlage des betreffenden Wohnhauses bezeichnet.

Das Rohrsystem 11 besteht aus abgedichtet miteinander verbundenen Rohrteilen 15 - 21, die innen und außen emailliert sind. Bei der Auswahl der Emailbeschichtung kommen nur solche Qualitäten infrage, die eine relativ hohe Temperaturfestigkeit erprobte Säurebeständigkeit und in bezug auf die Innenbeschichtung auch eine hohe Festigkeit gegenüber mechanischen Beanspruchungen z.B. durch Reinigungsgeräte eines Schornsteinfegers aufweisen. Den unteren Abschluß des Rohrsystems 11 bildet eine gleichfalls innen und außen emaillierte Auffangschale 22 für das Kondensat, welches über eine durch den Schornstein 10 hindurchgeführte Rohrleitung 23 nach außen abfließen kann.

Sämtliche emaillierte Rohrteile 15 - 21 und auch die Auffangschale 22 für das Kondensat weisen gleiche Innen- und Außendurchmesser auf, ihre Längen sind jedoch in Abhängigkeit von der Bauhöhe des Schornsteins 10 und dem Niveau der Öffnungen 12 und 14 verschieden. In die Öffnungen 12 und 14 im Schornstein 10 erstrecken sich von innen hülsenförmige Verlängerungsstücke 24 von an den Rohrteilen 16, 19 und 21 angeformten Rohraushalsungen 25. Diese hülsenförmigen Verlängerungsstücke 24 können gleich ihren zugeordneten Rohraushalsungen 25 einen runden oder rechteckigen lichten Querschnitt aufweisen und sie bestehen vorzugsweise aus Edelstahl. Es sind auch Lösungen mit Bauteilen aus säurefester Keramik möglich.

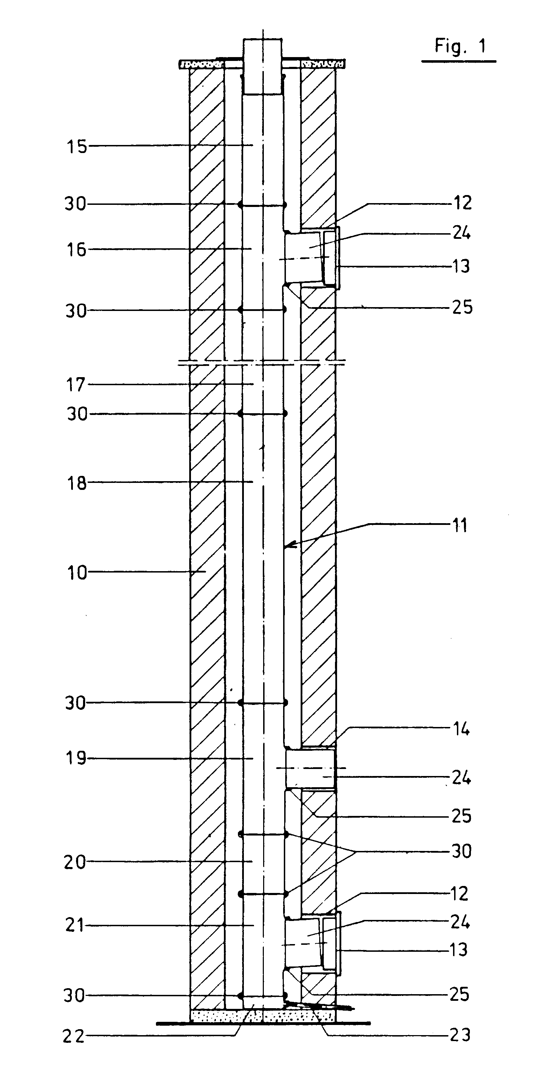

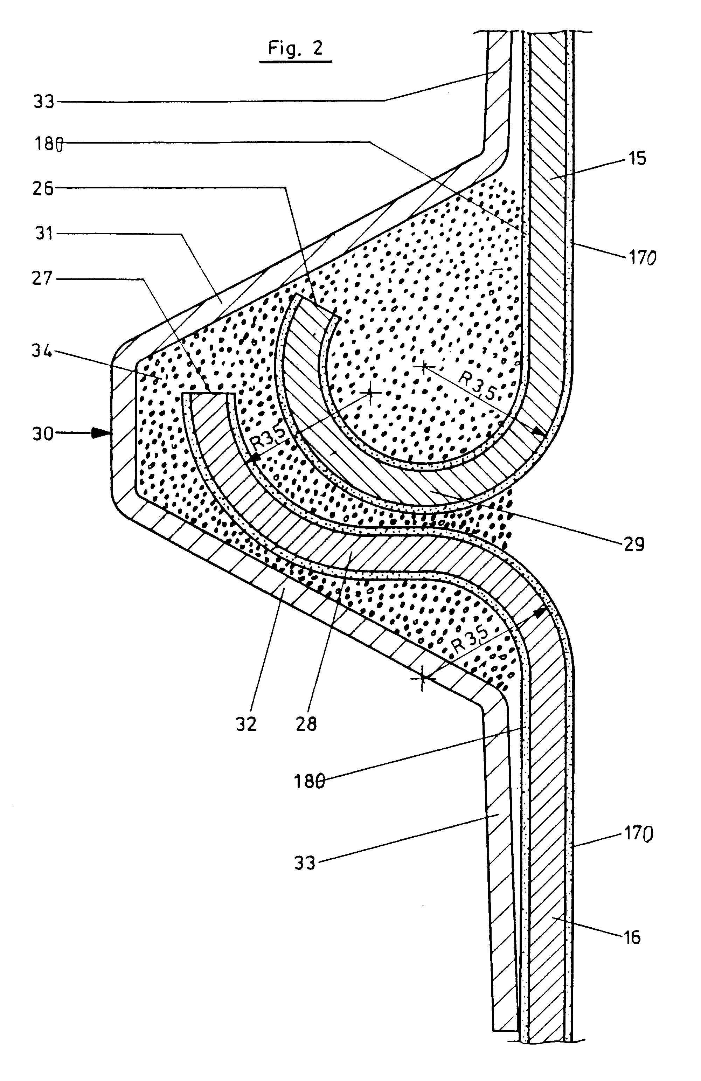

Die Verbindungen zwischen den einzelnen Rohrteilen 15, 16 bzw. 16, 17 bzw. 17, 18 usw. sowie zwischen dem untersten Rohrteil 21 und der Kondensat-Auffangschale 22 sind gleichartig und werden im folgenden in Verbindung mit Fig.2 näher erläutert, die einen Teil-Längsschnitt einer Verbindungsstelle zwischen zwei emaillierten Rohrteilen, z.B. 15 und 16 veranschaulicht. Mit 170 und 180 sind die inneren bzw. äußeren Emailschichten der Rohrteile 15 und 16 bezeichnet. Bei der Emaillierung der Rohrteile 15 - 21 sowie der Kondensat-Auffangschale 22 können die Schnittkanten 26 und 27 an den einzelnen Rohrteilen bzw. am oberen Ende der Auffangschale 22 aus bekannten Gründen (Email ist "kantenflüchtig") nicht einwandfrei mit einer Emailschicht überzogen werden. Damit nun diese korrosionsgefährdeten Schnittkanten 26 und 27 nicht den aggressiven Bestandteilen der Rauchgase und auch des Kondensats, welches an den Innenwandungen der Rohrteile herabläuft, ausgesetzt sind, werden sie durch Ausbildung von Flanschen 28, 29 an den Rohrenden aus dem abgasführenden lichten Querschnitt der Rohrteile 15 - 21 nach außen geführt. Beim Ausführungsbeispiel nach Fig. 1 und 2 weist jedes Rohrteil 15 - 21 einen oberen Tellerflansch 28 und einen unteren Bördelflansch 29 mit nach oben gerichteten Schnittkanten 27 bzw. 26 auf. Im Ausführungsbeispiel betragen die Radien am Tellerflansch 28 und Bördelflansch 29 3,5 mm, die Stärke des Stahlblechs der Rohrteile 15, 16 usw. 0,88 mm und die Stärke der Emailschicht 17 und 18 jeweils 0,2 mm. Die Radien an den Teller- und Bördelflanschen 28 bzw. 29 vermeiden eine Abzehrung des Emails während des Einbrennvorganges auch an diesen Stellen der Rohrteile. Das obere Ende der Kondensat-Auffangschale 22 weist gleichfalls einen Tellerflansch 28 auf.

Wie aus Fig. 2 weiter hervorgeht, sind die Teller- und Bördelflansche 28 bzw. 29 so bemessen, daß der Bördelflansch 29 im Tellerflansch 28 des jeweils benachbarten unteren Rohrteils sitzt und mit einem Abschnitt aus diesem nach oben herausragt, und zwar aus Gründen, die noch beschrieben werden.

Die Rohrteile 15 - 21 müssen nacheinander miteinander verbunden und von oben schrittweise in den vorhandenen Schornstein 10 eingeführt werden. Dabei beginnt man mit der Kondensat-Auffangschale 22 und dem Rohrteil 21, an dem dann das Rohrteil 20 angeschlossen wird usw.. In dieser Einbauphase der Rohrteile 15 - 21 sind die Verlängerungsstücke 24 noch nicht montiert, wodurch die Einführung der Rohrteile 16, 19 und 21 von oben in den vorhandenen Schornstein 10 überhaupt erst möglich ist. Der lichte Querschnitt des Schornsteins 10 kann nämlich die Rohrteile 16, 19 und 21 mit angebauten Verlängerungsstücken 24 nicht aufnehmen.

Zur aufeinanderfolgenden Verbindung der Kondensat-Auffangschale 22 mit dem Rohrteil 21 und des Rohrteils 21 mit dem Rohrteil 20 usw. dienen gleichartige Verbindungs- und Spannringe 30 mit im wesentlichen V-förmigem Querschnitt. Jeder Verbindungs- und Spannring 30 weist im Anschluß an seine gegenüberliegenden schrägen Seitenwänden 31, 32 geringfügig angestellte Auflageflansche 33 auf, die beim Zusammenziehen des Verbindungs- und Spannrings 30 mittels eines nicht gezeigten üblichen Schnellverschlusses vollflächig am Außenumfang benachbarter Rohrteile, z.B. 15 und 16 anliegen. Zur Verbindung zweier Rohrteile, z.B. 15 und 16 wird der Bördelflansch 26 am unteren Ende des Rohrteils 15 zunächst in den Tellerflansch 28 des nächsten unteren Rohrteils 16 eingesetzt, und dann wird der Hohlraum des profilierten Verbindungs- und Spannringes 30 mit einer säurebeständigen Dichtungsmasse 34, z.B. einem Schamottekitt ausgefüllt. Alsdann wird der Verbindungs- und Spannring 30 um die Flansche 28, 29 herumgelegt und mittels des schon erwähnten Schnellverschlusses kontraktiert. Dabei kommen die gegenüberliegenden Seitenwände 31 und 32 des Verbindungs- und Spannrings 30 in Anlage mit dem Bördelflansch 29 bzw. Tellerflansch 28 und die Rohrteile 15, 16 werden axial gegeneinandergedrückt und zugleich zentriert bzw. axial ausgefluchtet. Bei der Kontraktierung des Verbindungs- und Spannringes 30 wird die in dieser Phase noch plastische Dichtungsmasse 34 zwischen Bördelflansch 29 und Tellerflansch 28 sowie zwischen Bördelflansch 29 und Seitenwand 31 bzw. Tellerflansch 28 und Seitenwand 32 radial nach innen gedrückt, wobei die korrosionsgefährdeten Schnittkanten 26 und 27 in der Dichtungsmasse 34 eingebettet werden. Nach dem Aushärten der Dichtungsmasse 34 sind die Schnittkanten 26 und 27 hermetisch eingeschlossen bzw. versiegelt und es ist eine praktisch gasdichte Verbindung zwischen den Rohrteilen 15 und 16 hergestellt. Bei niedrigen Abgastemperaturen können auch dauerelastische Dichtungsmassen verwendet werden.

Bei der schrittweisen Verbindung der einzelnen Rohrteile 15 - 21 sowie des Rohrteils 21 mit der Kondensat-Auffangschale 22 und Einführung dieser Rohrteile in den Schornstein 10 ist darauf zu achten, daß die Rohraushalsungen 25 auf die öffnungen 12 und 14 im Schornstein 10 ausgerichtet sind. Wenn die Auffangschale 22 mit dem Rohrteil 21 und die Rohrteile 15 - 21 auf obige Weise miteinander verbunden und in den Schornstein 10 eingeführt sind, werden die hülsenförmigen Verlängerungsstücke 24 für die Rohraushalsungen 25 nach oben geneigt angesetzt. Der unbestreitbare Vorteil der kurzen Rohraushalsungen 25 in Verbindung mit den später anzubringenden Verlängerungsstücken 24 liegt darin, daß die Schornsteinwange (im Gegensatz zu derzeit gebräuchlichen Lösungen) nicht aufgeschlagen werden muß. Die Rohraushalsungen 25 sind unter Ausbildung von Abrundungen aus den Rohrteilen 16, 19 und 21 herausgeformt. Die Abrundungen sind im Ausführungsbeispiel mit einem emailliergerechten Radius von 3,5 mm hergestellt, um Email-Abzehrungen auch an diesen Stellen der Rohrteile 16, 19 und 21 zu vermeiden. Die Verbindung der Verlängerungsstücke 24 mit den Rohraushalsungen 25 kann durch nicht gezeigte Hebelschnellverschlüsse erfolgen, die einfach umzulegen sind.

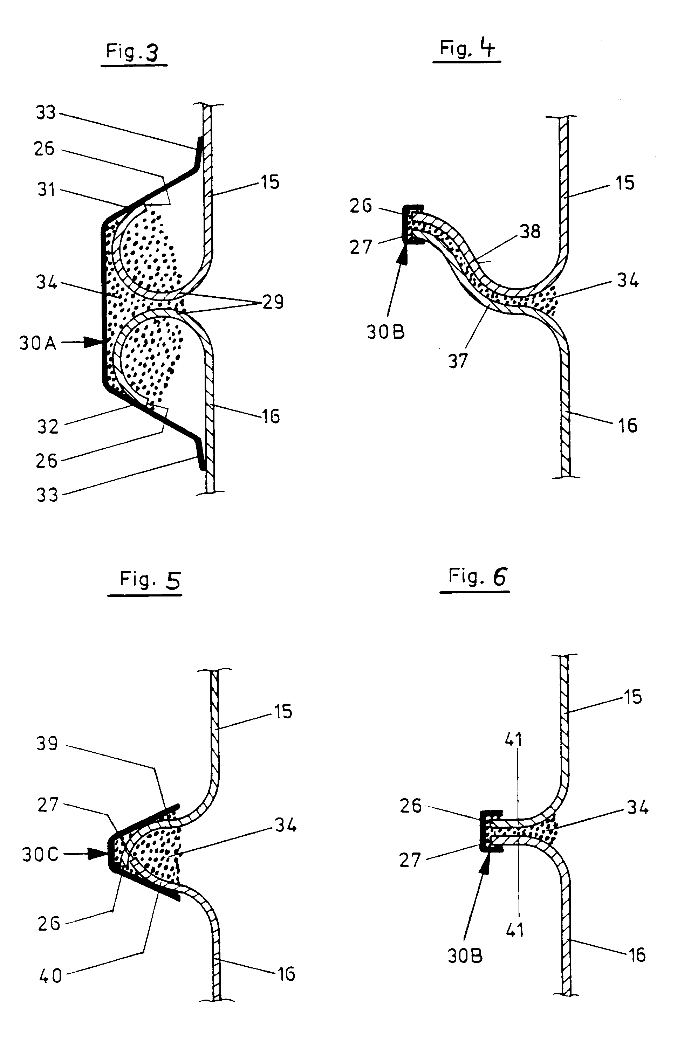

Beim Ausführungsbeispiel nach Fig. 3 weist jedes Rohrteil 15, 16, 17 usw. an beiden Enden einen dem Bördelflansch 29 am Rohrteil 15 in Fig. 2 entsprechenden Bördelflansch 29 auf. Der hier vorgesehene Verbindungs- und Spannring 30 A ist gegenüber dem Verbindungs- und Spannring 30 nach Fig. 2 axial verlängert. Im übrigen sind gleiche Teile mit den selben Bezugszahlen wie in Fig. 2 gekennzeichnet und die im wesentlichen emailfreien Schnittkanten 26 an den Rohrenden sind auch hier aus dem abgasführenden lichten Querschnitt der Rohrteile herausgeführt und in der Dichtungsmasse 34 korrosionsgeschützt eingebettet.

Beim Ausführungsbeispiel nach Fig. 4 weist jedes Rohrteil 15, 16, 17 usw. an seinem oberen Ende einen Tellerflansch 37 und an seinem unteren Ende einen Tellerflansch 38 auf, der in seiner Formgebung dem Tellerflansch 37 des jeweils benachbarten unteren Rohrteils angepasst ist. Jeder Tellerflansch 38 kann daher in passenden Eingriff mit einem Tellerflansch 37 gebracht werden, wobei zwischen den beiden Flanschen 37, 38 eine Schicht aus der Dichtungsmasse 34 angeordnet wird, die auch den Hohlraum des Verbindungs- und Spannringes 30 B ausfüllt. Die praktisch emailfreien Schnittkanten 26 und 27 an den Tellerflanschen 38 bzw. 37 sind in der Dichtungsmasse 34 innerhalb des Verbindungs- und Spannringes 30 B eingebettet.

In Fig. 5 ist eine Variante gezeigt, bei der jedes Rohrteil 15, 16, 17 usw. an seinem oberen Ende einen Tellerflansch 40 und an seinem unteren Ende einen umgekehrten Tellerflansch 39 aufweist, der den Tellerflansch 40 des benachbarten unteren Rohrteils außen übergreift. Mittels des Verbindungs- und Spannringes 30 C, der die Tellerflansche 39, 40 benachbarter Rohrteile umfaßt, können auch in diesem Fall benachbarte Rohrteile axial verspannt und radial in bezug aufeinander ausgefluchtet werden. Dies gilt auch für die Ausführungsform nach Fig. 4. Die Schnittkanten 26, 27 sind korrosionsgeschützt in der Dichtungsmasse 34 eingebettet.

Beim Ausführungsbeispiel nach Fig. 6 enthält jedes Rohrteil 15, 16,17 usw. an beiden Enden ebenflächige, um 90° nach außen gebogene Tellerflansche 41, die von einem Verbindungs- und Spannring 30 B umfaßt werden. Mit 34 ist in Fig. 6 wieder die Dichtungsmasse bezeichnet, welche die praktisch emailfreien Schnittkanten 26 und 27 an den Flanschen 41 hermetisch versiegelt und dadurch vor dem Angriff aggressiver Bestandteile in den Rauchgasen bzw. im Kondensat schützt, welches sich an den Innenwänden der Rohrteile 15, 16, 17 usw. niederschlagen und dort abfließen kann.

Bei sämtlichen vorstehend beschriebenen Ausführungsbeispielen sind die Rundungen an den Flanschen bzw. deren Übergänge zu den Rohrteilen mit ausreichend großen Radien hergestellt, damit Email-Abzehrungen während des Einbrennvorgangs an diesen Stellen nicht auftreten können.

**Patentansprüche**

1. Rohrsystem zur Verwendung als Schornstein, Schornsteineinsatz oder dergleichen, bestehend aus emaillierten Rohrteilen (15 - 21) mit Schnittkanten an den Rohrenden, wobei die emaillierten Rohrteile Flansche (28, 29; 37, 38; 39, 40; 41) aufweisen, an denen sie mittels Spannringe (30) miteinander verbunden sind, welche eine Dichtungsmasse (34) oder Profildichtung enthalten, und wobei ferner die Flansche mindestens in den zylindrischen Körper der Rohrteile (15 - 21) abgerundet übergehen und der Radius dieser abgerundeten Abschnitte mindestens etwa 2,5 mm beträgt, dadurch gekennzeichnet, daß die Schnittkanten (26, 27; 35) an den Flanschen (28, 29; 37, 38; 39, 40; 41) an den Rohrenden so weit aus dem abgasführenden lichten Querschnitt der Rohrteile (15 - 21) heraus nach außen geführt und derart in den Spannringen (30) angeordnet sind, daß bei der Kontraktion der Spannringe (30) die Dichtungsmasse (34) oder Profildichtung einerseits zwischen den Flanschen (28, 29; 37, 38; 39, 40; 41) und andererseits zwischen den Flanschen und den Seitenwänden der Spannringe (30) radial nach innen gedrückt wird, um die Schnittkanten (26, 27) in der Dichtungsmasse (34) oder Profildichtung hermetisch einzuschließen.

2. Rohrsystem nach Anspruch 1, dadurch gekennzeichnet, daß die Flansche (28, 29; 37, 38; 39, 40) an jedem Rohrteil (15 - 21) so abgerundet und ausgebildet sind, daß die Flansche benachbarter Rohrteile (15 - 21) ineinandergreifen, und daß ein Verbindungs- und Spannring (30) mit im wesentlichen V- oder U-förmigem Querschnitt die Flansche benachbarter Rohrteile (15 - 21) umfaßt, axial gegeneinander drückt und dabei die Rohrteile (15 - 21) zentriert.

3. Rohrsystem nach Anspruch 2, dadurch gekennezeichnet, daß die Flansche (28, 29) an jedem Rohrteil (15 - 21) aus je einem Tellerflansch (28) und Bördelflansch (29) mit nach oben gerichteten Schnittkanten (27, 26) bestehen, daß der Bördelflansch (29) an einem Rohrteil überstehend im Tellerflansch (28) eines benachbarten Rohrteils sitzt, und daß jeder Bördelflansch (29) und Tellerflansch (28) in Berührung mit den gegenüberliegenden schrägen Seitenwänden (31, 32) eines Verbindungs- und Spannringes (30) stehen.

4. Rohrsystem nach Anspruch 1, dadurch gekennzeichnet, daß die Flansche (29) an jedem Rohrteil (15 - 21) nur aus Bördelflanschen (29) bestehen, welche in Anlage mit den gegenüberliegenden schrägen Seitenwänden (31, 32) eines Verbindungs- und Spannrings (30 A) stehen.

5. Rohrsystem nach einem der Ansprüche 2, 3 oder 4, dadurch gekennzeichnet, daß jeder Verbindungs- und Spannring (30) an beiden Seiten mit geringfügig angestellten Auflageflanschen (33) versehen ist, die im kontraktierten Zustand des Verbindungs- und Spannringes (30) vollflächig am Außenumfang benachbarter Rohrteile (15 - 21) anliegen und somit der Verbindungsstelle zusätzliche Knickfestigkeit vermitteln.

**Claims**

1. Pipe system for use as a chimney, chimney insert or the like, consisting of enamelled pipe parts (15 - 21) with cut edges at the pipe ends, the enamelled pipe parts having flanges (28, 29; 37, 38; 39, 40; 41) at which they are connected to one another by means of clamping rings (30) containing a sealing compound (34) or shaped seal, and the flanges moreover changing to a rounded form at least into the cylindrical body of the pipe parts (15 - 21) and the radius of these rounded portions being at least about 2.5 mm, characterised in that the cut edges (26, 27) on the flanges (28, 29; 37, 38; 39,40; 41) at the pipe ends are carried so far outwards out of the waste-gas-carrying clear cross-section of the pipe parts (15 - 21) and are arranged in such manner in the clamping rings (30) that on contraction of the clamping rings (30) the sealing compound (34) or shaped seal is pushed radially inwards, on the one hand between the flanges (28, 29; 37, 38; 39, 40; 41) and on the other hand between the flanges and the side walls of the clamping rings (30) in order to enclose the cut edges (26, 27) hermetically in the sealing compound (34) or shaped seal.

2. Pipe system according to claim 1, characterised in that the flanges (28, 29; 37, 38; 39, 40) on each pipe part (15 - 21) are so rounded and formed that the flanges of adjoining pipe parts (15 - 21) engage in one another and a connecting and clamping ring (30) of substantially V-shaped or U-shaped cross-section embraces the flanges of adjoining pipe parts (15 - 21), pushes them axially together and in so doing centres the pipe parts (15 - 21).

3. Pipe system according to claim 2, characterised in that the flanges (28, 29) on each pipe part (15 - 21) consist in each case of a dish-shaped flange (28) and a rimmed flange (29) with upwardly directed cut edges (27, 26) and the rimmed flange (29) on one pipe part is seated in and projects above the dish-shaped flange (28) of an adjoining pipe part and each rimmed flange (29) and dish-shaped flange (28) is in contact with the opposite inclined side walls (31, 32) of a connecting and clamping ring (30).

4. Pipe system according to claim 1, characterised in that the flanges (29) on each pipe part (15 - 21) consist only of rimmed flanges (29) which are in abutment with the opposite inclined side walls (31, 32) of a connecting and clamping ring (30A).

5. Pipe system according to any one of claims 2, 3 and 4, characterised in that each connecting and clamping ring (30) is provided on both sides with bearing flanges (33) with a slight angle of attack which bear over their entire surface against the outer periphery of adjoining pipe parts (15 - 21) in the contracted state of the connecting and clamping ring (30) and consequently give the joint additional buckling resistance.

**Revendications**

1. Système de conduit à utiliser comme cheminée, pièce interne de cheminée, etc., constitué par des tronçons de conduit émaillés (15 à 21) comportant des bords de coupe aux extrémités de tronçon, les tronçons de conduit émaillés présentant des flasques (28, 29; 37,38; 39, 40; 41) par lesquels ils se raccordent l'un à l'autre au moyen d'anneaux de serrage (30) qui contiennent une masse d'étanchéité (34) ou un joint d'étanchéité profilé, en outre les flasques se transforment de façon arrondie au moins dans les corps cylindriques des tronçons de conduit (15 à 21) et le rayon de ces sections arrondies s'élevant au moins approximativement à 2,5 mm, caractérisé en ce que les bords de coupe (26, 27; 35) sur les flasques (28, 29; 37, 38; 39, 40; 41) des extrémités de conduit sont amenés vers l'extérieur hors de la section transversale libre, guidant le gaz de fumée, des tronçons de conduit (15 à 21) au point que, et sont agencés dans les anneaux de serrage (30) de façon que, lors de la contraction des anneaux de serrage (30) la masse d'étanchéité (34) ou le joint d'étanchéité profilé soit pressé radialement vers l'intérieur d'une part entre les flasques (28, 29; 37, 38; 39, 40; 41) et d'autre part entre les flasques et les parois latérales des anneaux de serrage (30) afin d'enfermer hermétiquement les bords de coupe (26, 27) dans la masse d'étanchéité (34) ou le joint d'étanchéité profilé.

2. Système de conduit suivant la revendication 1, caractérisé en ce que les flasques (28, 29; 37, 38; 39, 40; 41) de chaque tronçon de conduit (15 à 21) sont arrondis et réalisés de façon que les flasques de tronçons de conduit (15 à 21) contigus pénètrent l'un dans l'autre et en ce qu'un anneau de liaison et de serrage (30) de section transversale sensiblement en forme de V ou de U entoure les flasques de tronçons de conduit (15 à 21) contigus, les presse axialement l'un contre l'autre et centre alors les tronçons de conduit (15 à 21).

3. Système de conduit suivant la revendication 2, caractérisé en ce que les flasques (28, 29) de chaque tronçon de conduit (15 à 21) sont constitués par chaque fois un flasque en assiette (28) et un flasque en collet (29) avec des bords de coupe (27, 26) dirigés vers le haut, en ce que le flasque en collet (29) d'un tronçon de conduit est situé de façon à faire saillie dans le flasque en assiette (28) d'un tronçon de conduit contigu et en ce que chaque flasque en collet (29) et chaque flasque en assiette (28) sont en contact avec les parois latérales obliques opposées (31, 32) d'un anneau de liaison et de serrage (30).

4. Système de conduit suivant la revendication 1, caractérisé en ce que les flasques (29) de chaque tronçon de conduit (15 à 21) ne sont constitués que par des flasques en collet (29) qui sont en appui avec les parois latérales obliques opposées (31, 32) d'un anneau de liaison et de serrage (30A).

5. Système de conduit suivant l'une quelconque des revendications 2, 3 et 4, caractérisé en ce que chaque anneau de liaison et de serrage (30) est pourvu des deux côtés de flasques d'appui (33) qui sont faiblement inclinés, qui à l'état contracté de l'anneau de liaison et de serrage (30) sont appliqués complètement sur la périphérie externe de tronçons de conduit (15 à 21) contigus et qui ainsi déterminent à l'endroit de liaison une résistance supplémentaire au flambage.

Fig. 1

## Fig. 2

Fig. 3

Fig. 4

Fig. 5

Fig. 6